(19) Europäisches Patentamt
European Patent Office
Office européen des brevets

(11) **EP 3 170 746 A1**

(12) **EUROPÄISCHE PATENTANMELDUNG**

(43) Veröffentlichungstag:
**24.05.2017 Patentblatt 2017/21**

(51) Int Cl.:
**B64C 39/02** *(2006.01)* **G05D 1/00** *(2006.01)*

(21) Anmeldenummer: **15195431.0**

(22) Anmeldetag: **19.11.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HW Aviation AG**
**9491 Ruggell (LI)**

(72) Erfinder: **Weirather, Herbert**
**CH-9442 Berneck (CH)**

(74) Vertreter: **Kaminski Harmann**
**Patentanwälte AG**
**Landstrasse 124**
**9490 Vaduz (LI)**

Bemerkungen:
Geänderte Patentansprüche gemäss Regel 137(2) EPÜ.

(54) **VERFAHREN ZUR STEUERUNG EINES MULTICOPTERS UND VORRICHTUNGEN ZUR AUSFÜHRUNG DES VERFAHRENS**

(57) Die Erfindung betrifft ein Computerimplementiertes Verfahren zur Flugsteuerung eines Multicopters, welcher mindestens vier Propeller hat, die anhand einer Verarbeitung von einem Eingabebefehl zu einem Ausgabebefehl ansteuerbar sind, und einer Sensoreinheit zur fortlaufenden Ermittlung von Messwerten in Abhängigkeit des momentanen Bewegungszustandes des Multicopters hat, dadurch gekennzeichnet, dass der Eingabebefehl derart verarbeitet wird, dass der Multicopter ein für ein Tragflächenflugzeug charakteristisches Flugverhalten annimmt, wobei der Eingabebefehl erhalten und verarbeitet wird, in Abhängigkeit vom verarbeiteten Eingabebefehl eine Solländerung für den Bewegungszustand erzeugt wird, die Solländerung in ein körpereigenes Bezugssystem des Multicopters transformiert wird, und in Abhängigkeit von der transformierten Solländerung der Ausgabebefehl zur Ansteuerung der Propeller erzeugt wird. Die Erfindung betrifft weiterhin ein Flugsteuerungssystem und ein Anzeigesystem zur Benutzung eines Multicopters sowie ein Computerprogrammprodukt zur Ausführung des Verfahrens.

*Fig. 1*

EP 3 170 746 A1

**Beschreibung**

Die Erfindung betrifft ein computerimplementiertes Verfahren zur Flugsteuerung eines Multicopters nach dem Oberbegriff des Anspruches 1, ein Flugsteuerungssystem für einen Multicopter nach dem Oberbegriff des Anspruches 11, ein Anzeigesystem zur visuellen Unterstützung einer Flugsteuerung eines Multicopters nach dem Oberbegriff des Anspruches 13, sowie ein Computerprogrammprodukt nach dem Oberbegriff des Anspruches 15. Multicopter haben regelmässig vier, sechs, acht oder zwölf Propeller, wobei die Realisierung anderer Anzahlen an Propellern nicht ausgeschlossen ist und dem Prinzip des folgend genannten Standes der Technik sowie auch der Eignung und der Funktionsweise der später erläuterten Erfindung nicht im Wege steht.

Gattungsgemässe Multicopter haben zumeist eine Steuerung, welche der Benutzer anhand einer üblichen Fernbedienung mit zwei Steuerknüppeln realisieren kann. Mit diesen Steuerknüppeln werden folgende Funktionen bedient:

- Steigen/Sinken (kollektiver Pitch): Die Drehzahl aller Propeller wird gleichzeitig erhöht, die dabei gegenläufig drehenden Propeller erzeugen einen variablen Auftrieb. Der Multicopter kann somit senkrecht steigen und sinken. Das Steigen bzw. Sinken wird durch eine Aufwärts-/Abwärts-Bewegung eines der beiden Steuerknüppel veranlasst.

- Nicken: Die Drehzahl der hinteren oder der vorderen Propeller wird kurzzeitig erhöht, wodurch der Multicopter um seine y-Achse kippt (nickt). Das Nicken wird durch eine Aufwärts-/Abwärts-Bewegung des anderen der beiden Steuerknüppel veranlasst.

- Rollen: Die Drehzahl der linken oder der rechten Propeller wird kurzzeitig erhöht, wodurch der Multicopter um seine x-Achse kippt (rollt). Das Rollen wird durch eine Seitwärts-Bewegung eines der beiden Steuerknüppel veranlasst.

- Gieren: Die Drehzahlen der - in Bezug zum Multicopter-Mittelpunkt jeweils einander gegenüberliegenden, simultan angesteuerten und gleichsinnig drehenden - Propeller-Paare werden relativ zu einander variiert. Dadurch entsteht ein Differenz-Drehmoment, welches den Multicopter gieren lässt. Das Gieren wird durch eine Seitwärts-Bewegung des anderen der beiden Steuerknüppel veranlasst.

Unterschiedlichste Modi, wie die US 8,474,761 offenbart, gewährleisten oder unterstützen die Stabilität dieser "attitude control" des Multicopters, um ihn leichter steuern zu können:

- Positionsmessung per GPS oder nach unten gerichtetes Videobild, womit Windeinflüsse und ein Driften der Mess-Sensorik korrigiert werden können

- Höhenmesser zum Stabilisieren der einmal erreichten Höhe, wodurch der Multicopter seinen kollektiven Pitch adjustiert bzw. regelt, damit die Höhe trotz unterschiedlichen Nick- oder Rolllagen eingehalten wird

- Sonar zur Messung der Höhe über Grund und zur vereinfachten Landung

Zur Schwebe-Stabilisierung wird oftmals ein Positionssignal, wie etwa ein GNSS Signal verwendet. Hierbei wird der Multicopter auf eine Geschwindigkeit von Null abgebremst, sobald kein Eingabesignal durch die Fernbedienung mehr erfolgt. Danach hält der Multicopter automatisch seine Position, dies sogar, wenn er Turbulenzen ausgesetzt ist.

Anhand einer "Home"-Funktion wird der Multicopter um seine z-Achse rotiert, sodass die Neuausrichtung der geräteeigenen x-Achse (Front) auf den Startpunkt gerichtet bleibt. Für diese Funktion wird ebenfalls ein Positionierungssystem benötigt. Der Multicopter kann somit einfach wieder zurück zur Ausgangsposition geflogen werden, sollte er einmal ausser Sichtweite oder ein Videosignal ausgefallen sein.

Gemäss der US 8,473,125 ist aus dem Stand der Technik weiters eine Kurvensteuerung bekannt, in welche die Geschwindigkeit in der $y_N$-Achse (N steht für das NED-Bezugssystem (NED = "North-East-Down"), welches derart um seine $z_{NED}$-Achse gedreht ist, dass die $x_B$-Achse des gerätebezogenen Koordinatensystems mit der $x_N$-Achse azimutal gleichgerichtet sind) zu Null gesetzt wird. Daher zeigt im Rahmen dieser Drehkompensation bei einer zweidimensionalen Kurve die $x_N$-Achse schliesslich immer in Flugrichtung und der vorgegebene Kurvenradius wird eingehalten.

Trotz diesen Unterstützungsmaßnahmen ist das Fliegen eines Multicopter aufgrund der sechs Freiheitsgrade äusserst schwierig.

Deshalb soll eine neuartige Methode zur Steuerung eines Multicopters Abhilfe schaffen, welche die Flugsteuerung eines Multicopters durch Reduzierung von Komplexität für einen Benutzer deutlich vereinfacht.

- Steuerung des Vorwärts-Schubs: Der Multicopter ändert seine Nicklage um die y- Achse, hält gleichzeitig aber automatisch seine Flugbahn bzw. Höhe (sofern keine weiteren Eingaben getätigt werden) und beschleunigt so auf eine gewünschte Vorwärtsgeschwindigkeit. Die Nicklage wird konstant gehalten, sofern die Ansteuerung sich nicht ändert, und definiert die Beschleunigung in Kombination mit der Leistungsabgabe der Propeller. Eine am Multicopter nach vorne blickend und bewegbar befestigte Kamera kann dabei um den momentan realisierten Nickwinkel gegenläufig geneigt werden und dadurch stets genau in Flugrichtung (in kinematische Vektorrichtung) weisen.

- Steuerung der Nicklage: Die Nicklage wird zusätzlich zur besagten Schubsteuerung variiert. Bei Erhöhung des Nickwinkels wird ein Sinkflug und bei Reduzierung ein Steigflug eingeleitet, geht man von einem Horizontalflug aus, insbesondere wobei bei gleichzeitigem Ändern des Gesamtschubs in einem Verhältnis abhängig von der Geschwindigkeit eine vorhersehbare Bahnkrümmung über einen weiten Geschwindigkeitsbereich entsteht.

- Steuerung von Kurven: Dabei wird bei einer Eingabe zunächst ein Rollmoment um die kinematische x-Achse erzeugt und weiterführend von der Steuerung (je nach Geschwindigkeit) die Gierrate für einen koordinierten Kurvenflug nachgeführt. Dabei kann eine Kurvenkompensation hinzugeregelt werden, d.h. dass je nach Rollwinkel (Hängewinkel) die Steigrate (Pitchrate) bzw. der Steigwinkel automatisch konstant gehalten wird. Ohne jene Kurvenkompensation muss - ähnlich wie bei einem Flugzeug (dort wird am Steuerknüppel gezogen) - die Nicklage angehoben werden, damit der Multicopter nicht an Höhe verliert. Damit werden die Geschwindigkeiten in kinematischer y-Richtung, also quer zum Multicopter, immer auf Null geregelt (sofern kein Schiebewinkel kommandiert wird) und ein Seitengleitflug (Schiebeflug) wird vermieden.

- Steuerung des Schiebeflugs: Ein Schiebeflug von maximalem Gierwinkel von beispielsweise 45° kann durch die Steuerung eingeleitet werden. Dabei ändert sich bei ursprünglicher Vorwärtsfahrt der kinematische Richtungsvektor vom Multicopter geringfügig und eine Krümmung wird eingeleitet. Ein Gieren bezieht sich auf das kinematische Bezugssystem und belässt daher den kinematischen Rollwinkel (Hängewinkel) auch im Vorwärtsflug konstant. Bei "normalem" Gieren in Bezug auf das körpereigene bzw. köperfeste Koordinatensystem würde sich sonst ein Hängewinkel entgegen aufbauen. Anhand eines Beispiels sei dies erklärt: Der Multicopter weist eine Nicklage von 10° nach vorne auf und bewirkt nun ein Gieren um 45° nach links. Bei der erfindungsgemässen Steuerung bleibt die Nicklage bei 10° und die körperbezogene X-Achse zeigt um 45° nach links ("links unten") im Vergleich zum Flugvektor. Dadurch wird die Flugbahn gekrümmt. Bei einer Steuerung gemäss dem Stand der Technik würde die Nicklage auf 5° reduziert und sich ein Rollwinkel (Hängewinkel) von 5° ergeben, wodurch die Flugbahn nicht gekrümmt wird.

- Automatische Steuerung von Start und Landung: Auf einen Befehl hin (z.B. Knopfdruck) startet der Multicopter senkrecht auf eine bestimmbare gewünschte Höhe. Bei nochmaliger Aktivierung der Funktion landet der Multicopter wieder, sofern die besagte Vorwärtsschub-Steuerung auf Null gesetzt ist bzw. sofern der Multicopter über dem Boden schwebt ("hovert").

Anhand dieser Steuerungselemente kann ein Multicopter merklich einfacher gesteuert werden. Dabei ist das Flugobjekt bei hoher Geschwindigkeit, wie auch im Langsamflug sehr präzise und einfach steuerbar. Da zumindest eine Sensoreinheit, insbesondere mehrere Sensoren in Echtzeit Messdaten mit dem Controller kommunizieren müssen, um die Methode zu verwirklichen, bietet es sich an, die Flugregelung im Multicopter selbst (z.B. im Controller) zu implementieren. Die Methode über die Fernsteuerung (z.B. Fernbedienung, Steuerknüppel, Computer, tablet, smart phone, etc.) einzuprogrammieren ist aber nicht ausgeschlossen.

Aufgabe der Erfindung ist die Bereitstellung einer verbesserten Steuerung für einen Multicopter.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gegenstand der Erfindung ist ein Verfahren zur Steuerung eines Multicopters, welcher mit mindestens vier Propellern ausgestattet ist. Die Motoren der Propeller sind einzeln und variabel ansteuerbar und machen die Auslenkung und die Geschwindigkeit des Multicopters für einen Benutzer bestimmbar. Auch können die Propeller, wie es aus dem Stand der Technik bekannt ist, angestellt oder schwenkbar an dem Multicopter angeordnet sein. Der Hauptauftrieb für einen Multicopter wird typischerweise über die rotierenden Propeller erzeugt und - im Gegensatz zu klassischen Flugzeugen - kaum bzw. nicht mittels fix montierter Flügel.

Ein erfindungsgemässer Multicopter weist weiterhin zumindest eine Sensoreinheit, insbesondere diverse Sensoren, auf, welche die für die Steuerung benötigten Messdaten zur Verfügung stellen. Eine solche Sensoreinheit oder die Sensoren können umfassen: dreiachsige Gyro-Sensoren, Beschleunigungssensoren, Höhenmesser etc.

Weiters kann der Multicopter auch über eine Kamera verfügen, welche mindestens einachsig schwenkbar am Multicopter angeordnet sein kann. Unter Schwenkbarkeit ist hier sowohl ein mechanischen Schwenken der Kamera, also z.B. eine Veränderung der räumlichen Orientierung der Kamera relativ zum Multicopter, oder auch ein digitales Schwenken, also ein flugrichtungsabhängiges Auswählen eines auszugebenden Bildbereichs, zu verstehen. Die Kamera kann, wie die Front des Multicopters nach vorne weisen und damit stets in Flugrichtung. Verfügt die Kamera z.B. über ein sehr weitwinkliges Sichtfeld (180° oder gar 360°), so ist auch eine Ausrichtung der Kamera-Mittelachse "nach unten" realisierbar. Mit dieser kann die Kamera gleichzeitig in Flugrichtung und auf den Boden schauen, wo sie im Sinne eines Sensors die momentane Geschwindigkeit bestimmen kann. Ansonsten kann eine weitere Kamera zum Einsatz kommen, welche dediziert in Richtung Boden ausgerichtet ist. Anstelle des besagten mechanischen Schwenkens kann bei hinreichend weitwinkligem Sichtfeld auch ein besagtes digitales Schwenken stattfinden. Statt die Kamera also in Fahrtrichtung zu schwenken, wird derjenige Bildausschnitt der Kamera angezeigt, der in die momentane Flugrichtung weist. Das Kamerabild kann jeweils so bereitgestellt werden, dass dieses um einen gewünschten Faktor angepasst (versetzt) erzeugt ist, wie zum Beispiel einem künstlichen Anstellwinkel entsprechend (wie diesen ein Flugzeug bei einer entsprechenden Flugbewegung aufweisen würde).

Der Multicopter wird über eine ihm zugewiesene Steuerungseinheit von einem Benutzer bedient. Diese Steuerungseinheit kann eine Fernbedienung sein, mit wenigstens einem Steuerknüppel und/oder mit Display zur Live-Anzeige der Kamerabilder als Videosequenz. Ein oder mehrere visuelle Steuerknüppel können dabei auch auf dem Display angezeigt und per Touch-Funktion bedient werden. Die Bedienung des Multicopters über die Gyro-Sensoren eines Smartphones oder Tablets (oder ähnlich) ist ebenfalls möglich. Die Fernbedienung steht über Funk oder andere drahtlose Technologien mit dem Multicopter in Verbindung. Erfindungsgemäss kann die Steuerungseinheit sich auch im Multicopter befinden, insbesondere wenn es sich um einen bemannten Multicopter handelt.

Ein Multicopter mit der erfindungsgemässen Steuerungsmethode eignet sich bevorzugt für das so genannte "drone racing" (zu Deutsch etwa: Multicopter-Rennen). Bei diesen Rennen werden dreidimensionale Trajektorien mit erhöhter Geschwindigkeit geflogen, dies z.B. um versetzte Pylonen oder durch enge Tore, weshalb sich eine Bedienung nach Methoden gemäss dem Stand der Technik hierbei als besonders schwierig und anspruchsvoll gestaltet. Ein weiteres beispielhaftes Anwendungsgebiet ist ein Verfolgungsflug zum Filmen eines "downhill bikers".

Bei diesen Anwendungen ist die Geschwindigkeit von hoher Bedeutung, daher soll bei jeglichen Kurvenflügen die kinetische Energie grösstmöglich erhalten bleiben. Da insbesondere für Kurvenflüge und sonstige Manöver diverse Kontrollbefehle gleichzeitig koordiniert werden müssen, wird einem Benutzer besonderes Können abverlangt.

Insbesondere bei FPV-Anwendungen (FPV: englisch: First Person View, deutsch etwa: Sicht aus der Ich-Perspektive), in welchen ein Multicopter anhand eines Kamerabildes gesteuert wird, ist die Flugrichtung nicht gleich der Blickrichtung der auf dem Multicopter angeordneten Kamera. Daher muss für ein seitliches Driften, ein Auf- oder Abdriften immer manuell korrigierend eingegriffen werden, wodurch das FPV-Fliegen sehr schwierig wird. Daher soll die erfindungsgemässe Steuerung für den Multicopter ein Flugverhalten vermitteln, welches dem eines regulären Tragflächen-Flugzeuges ähnelt, da der Multicopter auf diese Weise einfacher, effizienter und schneller durch ein Hochgeschwindigkeitsrennen lenkbar ist.

Dabei wird - ganz im Gegensatz zur US 8,473,125 - ein seitliches Driften in Bezug auf den Rumpf des Multicopters unterbunden, wodurch die Kamera am Multicopter azimutal stets in Flugrichtung ausgerichtet ist.

Dies bedeutet, dass die am Multicopter fixierte Kamera bei einem Absinken oder Ansteigen während eines Kurvenfluges seitlich driftet. In der Steuerung aus der US 8,473,125 wird vom Benutzer ein Kurvenradius und kein Rollwinkel vorgegeben. Um eine horizontale Kurve (Absinken/Ansteigen gleich null) mit einem Tragflächenflugzeug zu fliegen, muss der Pilot erst einen Rollbefehl geben und anschliessend den Steuerknüppel zurückziehen (also "ansteigen"), um die Kurve zu fliegen. Dieses Steuerverhalten wird durch die erfindungsgemässe Steuerung automatisch gesteuert für eine entsprechende Kompensation verwirklicht.

Ein mit dem erfindungsgemässen Modus (Verfahren) betriebener Multicopter weist eine gewisse Vorwärts-Grenzgeschwindigkeit auf. Im Bereich einer Geschwindigkeit von Null bis zur Grenzgeschwindigkeit befindet sich der Multicopter in einem Schwebemodus, in welchem der Multicopter im Wesentlichen so gesteuert wird wie aus dem Stand der Technik bekannt.

Wird im erfindungsgemässen Modus der Vorschub Null (es erfolgt also z.B. diesbezüglich keinerlei Eingabe durch den Benutzer), so bremst der Multicopter automatisch auf eine Longitudinalgeschwindikeit von Null ab und wechselt "auf dem Weg" zur Nullgeschwindigkeit bei der Grenzgeschwindigkeit in den Schwebemodus. Hierbei reguliert der Multicopter automatisch seine Position und hält z.B. auch bei Seitenwind anhand entsprechender Ansteuerung der Propeller automatisch dagegen.

Die Nase eines Tragflächenflugzeuges zeigt, unter Vernachlässigung des Anstellwinkels, im Wesentlichen in Flugrichtung. Bei dauerhaftem Anziehen des Steuerknüppels (Elevation) würde das Flugzeug einen "Looping" fliegen. Bei dauerhaftem Anziehen des Steuerknüppels an der Steuerung eines herkömmlichen Multicopters wird die Vorwärtsgeschwindigkeit abgebremst und dabei eingestellte der Nickwinkel wird gehalten. Mit einem "rate command controller" würde der Multicopter gar einen "Flip" ("Looping" mit minimalem Radius) vollziehen. Das besondere Verhalten eines Flugzeuges ist das Verhältnis zwischen dem Anstellwinkel bzw. dem Nickwinkel, der Gravitationskraft in Bezug auf den Anstellwinkel, und der Auftriebskraft in Bezug auf den Anstellwinkel, abhängig von seiner Geschwindigkeit. Dadurch kann über einen weiten Geschwindigkeitsbereich eine ähnliche Bahnkrümmung erreicht werden.

Anhand einer simultanen Ansteuerung der Bewegungen durch einen "attitude controller" oder einen "rate command controller" können das für ein Flugzeug typische Verhalten imitiert werden. Dies setzt allerdings besondere Fähigkeiten eines Benutzers voraus, zumal insbesondere jeder Multicopter ein individuelles Verhalten aufweist, welches dementsprechend für sich genommen nochmals zu berücksichtigen wäre. Ein Novize findet mit der Erfindung ein konstantes Steuerverhalten vor, welches u.a. charakterisiert wird durch eine Schubregelung (Vorwärtsgeschwindigkeit) und das automatische Überführen in einen Schwebemodus bei Schubabschaltung. Ein Gieren kann erfindungsgemäss in einem bestimmten Bereich gesteuert werden. Ohne Vorgabe eines Gierwinkels, wird dieser wie oben beschrieben automatisch nachgeführt, das heisst die Front des Multicopters zeigt stets in Flugrichtung. Ein Rollen wird geregelt durch Bezugnahme auf das kinematische Koordinatensystem, damit für jede Nickposition ein korrektes Rollen ausgeführt wird.

Die Erfindung betrifft ein computerimplementiertes Verfahren zur Flugsteuerung eines Multicopters, welcher mindestens vier Propeller, die mittels eines Ausgabebefehls ansteuerbar sind, und zumindest eine Sensoreinheit zur fortlaufenden Ermittlung von Messwerten in Abhängigkeit des momentanen Bewegungszustandes des Multicopters hat. Der Multicopter definiert ein körpereigenes Bezugssystem, welches relativ zu einem äusseren (kinematischen) Bezugssystem orientierbar ist und dessen Lage relativ zu (bzw. in) dem äusseren Bezugssystem veränderbar ist. Die relative Lage definiert sich durch einen jeweiligen Flugzustand, also eine Position und Orientierung, des Multicopters im Raum. Das Verfahren betrifft eine Steuerung der Drohne im Flug, der Multicopter ist also durch ein Betreiben der Propeller basierend auf dem Ausgabebefehl in einen bestimmten Flugzustand versetzt.

Erfindungsgemäss wird ein den Flugzustand beeinflussender Eingabebefehl derart verarbeitet, dass der Multicopter eine aufgrund des Eingabebefehls für ein Tragflächenflugzeug zu erwartende Flugbewegung ausführt, wobei der Eingabebefehl erhalten wird. Der Befehl kann z.B. mit einer Fernbedieneinheit erzeugt und an ein Steuergerät für den Copter übermittelt werden. In Abhängigkeit vom dem Eingabebefehl werden dann eine Solländerung für den Flugzustand abgeleitet und ein Verhältnis der Solländerung zum körpereigenen Bezugssystem berechnet. Die Solländerung wird in ein körpereigenes Bezugssystem des Multicopters transformiert. Ferner wird in Abhängigkeit von der transformierten Solländerung, insbesondere mit Verarbeitung eines aktuellen Messwerts von der Sensoreinheit, der Ausgabebefehl zur Ansteuerung der Propeller aktualisiert.

In einer Ausführungsform des erfindungsgemässen Verfahrens ist der Ausgabebefehl durch Ansteuergrössen zur Ansteuerung der Propeller verkörpert und die Ansteuergrössen werden in Abhängigkeit von den Messwerten und dem Eingabebefehl geregelt.

Das erfindungsgemässe Verfahren betrifft gemäss der zuletzt genannten Ausführungsform somit ein spezifisches Regelungsverfahren zur geregelten Propelleransteuerung bei einem Multicopter. Als Regelgrösse kann hierbei der Flugzustand bzw. die Flugbewegung angesehen werden. Eine Führungsgrösse wird beispielsweise aus einer kommandierten Steuerung, z.B. einer Schuberhöhung, abgeleitet, z.B. als Soll-Geschwindigkeit. Eine Störgrösse ist z.B. verkörpert durch eine äussere Einwirkung auf das System, z.B. Seitenwind. Spezifische Regelungen, welche erfindungsgemäss ein Verhalten des Multicopters entsprechend einem Tragflächenflugzeug bereitstellen, sind im Folgenden beschrieben. Es versteht sich, dass diese Regelungen jeweils für sich allein genommen, jedoch ebenso in Kombination und simultan ausführbar sind, z.B. bei einer gewünschten Beschleunigung des Multicopters und gleichzeitigem Steig- und/oder Kurvenflug.

Gemäss einer Ausführungsform der Erfindung erfolgt bei Erhalt eines Gieränderungsbefehls als Eingangsbefehl eine Gierregelung mittels derartiger, insbesondere fortlaufender, Aktualisierung des Ausgabebefehls, dass ein gegebener oder geregelter Nickwinkel des Multicopters durch die Gierregelung unverändert bleibt und eine Gierwinkeländerung entsprechend des Gieränderungsbefehls erfolgt, insbesondere wobei eine Flugbahnkrümmung erzeugt wird.

Als Gieränderungsbefehl ist hierbei z.B. ein Signal erzeugt durch eine entsprechende Benutzersteuerung zu verstehen, wobei eine Winkeländerung der Drohne um eine z-Achse im körpereigenen Bezugssystem, also um eine in einem Schwebezustand der Drohne vertikal verlaufende Achse, vorgegeben bzw. kommandiert wird. Ein Gieren kann generell durch Erzeugen eines definierten Differenzdrehmoments (siehe oben) eingeleitet und ausgeführt werden. Der Gieränderungsbefehl kann z.B. durch ein Drehen eines zur Steuerung des Multicopters verwendeten Joysticks kommandiert werden

Ferner kann bei der erfindungsgemässen Multicopter-Steuerung eine automatische Gierregelung derart erfolgen, dass eine räumliche Orientierung des Multicopters fortlaufend derart nachgeführt wird, dass eine auf das körpereigene Bezugssystem bezogene Soll-Bewegungsrichtung für den Multicopter in Richtung der Flugbewegung, insbesondere in Richtung eines dem Multicopter zugeordneten Bewegungsvektors, angepasst wird.

Als Soll-Bewegungsrichtung für den Multicopter ist eine Vorwärtsrichtung zu verstehen, d.h. der Multicopter ist definiert durch seine Ausgestaltung, insbesondere durch die Position und Orientierung einer angebrachten Kamera, sowie durch seine Front. Die Soll-Bewegungsrichtung zeigt somit insbesondere in die durch die Front definierte Vorwärtsrichtung, wobei diese Richtung in einer körperfesten x-z Ebene variieren kann.

Die Orientierung des Multicopters im Raum wird mittels der automatischen Gierregelung also im Wesentlichen um die kinematische z-Achse (Gierachse) geregelt. Als Input für diese Regelung dienen hierbei Bewegungs- und/oder Lageinformationen, die von der Sensoreinheit oder den mehreren Sensoren des Multicopters bereitgestellt werden, und eine zu fliegende Soll-Flugbahn bzw. deren aktuelle Richtungskomponente.

Bei Detektion einer an dem Multicopter resultierenden Seitengeschwindigkeit (wirkenden Seitenkraft) erfolgt also eine automatische Gierregelung derart, dass eine körpereigene Vorwärtsorientierung des Multicopters (im körpereigenen Bezugssystem) an eine aus der detektierten Seitengeschwindigkeit resultierende Flugrichtung angenähert wird, insbesondere wobei die resultierende Flugrichtung im Wesentlichen gleichgerichtet wird zur Seitengeschwindigkeit.

Insbesondere kann im Rahmen der automatischen Gierregelung bei Detektion durch die Sensoreinheit einer für den Multicopter resultierenden Seitengeschwindigkeit von aussen (z.B. Seitenwind), insbesondere bei Detektion einer Kraftkomponente quer zur auf das körpereigene Bezugssystem bezogenen Soll-Bewegungsrichtung oder quer zur Richtung der aktuellen Flugbewegung, mittels der automatischen Gierregelung ein Gieren des Multicopters in Richtung der Seitengeschwindigkeit solange bewirkt werden, bis die detektierte Seitengeschwindigkeit einen bestimmten Schwellwert unterschreitet oder gleich Null wird, insbesondere wobei eine von der Seitengeschwindigkeit abhängige Störgrösse oder Führungsgrösse für die automatische Gierregelung verarbeitet wird.

Ein Seitendrift des Multicopters wird dadurch weitgehend unterbunden. Ohne Zutun des Piloten und mit rein kinematischen Messwerten würde also der Multicopter irgendwann "mit Rückenwind" fliegen, da eine etwa durch Wind bedingte y-Geschwindigkeit (Kraft quer zur Flugrichtung) im kinematischen Bezugssystem durch ein entsprechendes Gieren zu Null oder nahe Null geregelt wird. Kommt beispielsweise der Wind plötzlich 90° von links, wird eine kinematische y-Geschwindigkeit nach rechts detektiert und der Multicopter eine Gierbewegung nach rechts einleiten, bis die besagte y-Geschwindigkeit zu Null wird.

In einer weiteren Ausführungsform der Gierregelung wird eine aerodynamische Lösung beansprucht, bei der mithilfe einer Seitenflosse als Sensoreinheit der aerodynamische Schiebewinkel oder die aerodynamische Seitengeschwindigkeit bzw. der aerodynamische Druck auf diese Seitenflosse gemessen wird und jener mit einem Gieren zu Null oder nahe Null geregelt wird. Eine Seitenflosse hat an sich ein aerodynamisch stabiles Verhalten (je nach Abstand vom Schwerpunkt), aber die Regelung der Motoren würde ohne Messung immer dagegen arbeiten. Da hier die Geschwindigkeit in y-Richtung anders gemessen wird, würde in diesem Fall bei Windeinfluss der Multicopter die Nase in den Wind drehen. Ohne Windeinfluss ist die kinematische Lösung identisch zur aerodynamischen. Die Regelung ist in beiden Fällen identisch, nur durch die Messung (aerodynamisch oder kinematisch) ergibt sich ein leicht differenziertes Verhalten bei Windeinfluss.

Gemäss einer weiteren Ausführungsform erfolgt bei Erhalt eines Schubänderungsbefehls als Eingabebefehl eine Schubregelung mittels derartiger, insbesondere fortlaufender, Aktualisierung des Ausgabebefehls, dass eine definierte Änderung der Rotationsgeschwindigkeit von zumindest zwei Propellern und eine Nickwinkeländerung des Multicopters bewirkt wird und dadurch eine Bewegungsgeschwindigkeit des Multicopters entsprechend dem Eingabebefehl angepasst wird, wobei ein die aktuelle Flugbewegung repräsentierender Bewegungsvektor zumindest im Rahmen der Schubregelung richtungsstabil gehalten wird, insbesondere wobei der Multicopter auf einer durch die aktuelle Flugbewegung definierten Bewegungsachse gehalten wird. Dabei bleibt insbesondere die Flugbahn des Multicopters im Sinkflug oder Steigflug durch die Schubregelung ungekrümmt.

Bei der Schubregelung kann ferner in Abhängigkeit von dem Schubänderungsbefehl eine Soll-Bewegungsgeschwindigkeit des Multicopters als Führungsgrösse abgeleitet werden und zudem in Abhängigkeit von der Führungsgrösse und von den durch die Sensoreinheit bereitgestellten Messwerten die Ansteuergrössen für die Propeller so geregelt aktualisiert werden, dass der Multicopter in einen Flugzustand mit der Soll-Bewegungsgeschwindigkeit, insbesondere unter Beibehaltung der aktuellen Flugbahn, versetzt wird.

Typischerweise wird bei einer kommandierten Erhöhung des Schubs zunächst die Nicklage des Multicopters geändert und dann wird die Drehzahl/Leistung aller vier Propeller dahingehend anpasst, sodass die Flugbahn nicht gekrümmt wird, sondern der Multicopter nur in kinematischer x-Richtung beschleunigt oder verzögert. Insbesondere wird eine Vergrösserung der Propellerleistung von zumindest zwei Propellern (bei einem Quadrocopter der beiden Heck-Propeller), in Abhängigkeit der gewünschten Geschwindigkeitszunahme aller vier Propeller, geregelt. Der Nickwinkel des Multicopters wird dadurch ebenfalls geregelt und so eingestellt, dass durch die Geschwindigkeitszunahme keine Flugbahnkrümmung auftritt.

Gemäss einer Ausführungsform der Erfindung erfolgt bei Erhalt eines Nickänderungsbefehls als Eingabebefehl eine Nickregelung dadurch, dass durch die Aktualisierung von zumindest einer Ansteuergrösse bzw. des Ausgabebefehls eine Nickwinkeländerung für den Multicopter derart bewirkt wird, dass der Multicopter in einen Flugzustand mit einem aus dem Nickänderungsbefehl abgeleiteten Soll-Nickwinkel versetzt wird, insbesondere wobei der Soll-Nickwinkel als Führungsgrösse verarbeitet wird. Bei einem so durch den Eingabebefehl einzuleitenden Nicken wird also eine Neigung des Multicopters um die y-Achse (senkrecht zur vertikalen (im Schwebeflug) Gierachse und zur Rollachse (frontweisend)) verändert. Ausserdem wird während der Nickwinkeländerung die Gesamtleistung der Propeller in Abhängigkeit von der Geschwindigkeit erhöht (beim Ziehen des Steuerknüppels) oder reduziert (beim Drücken des Steuerknüppels), sodass die Flugbahn vorhersehbar gekrümmt wird. Der Nickänderungsbefehl kann z.B. durch das Ziehen oder Drücken eines zur Steuerung des Multicopters verwendeten Joysticks kommandiert werden.

Nach einer bestimmten Ausführungsform werden im Rahmen einer Rollregelung, bei Erhalt eines Rolländerungsbefehls als Eingabebefehl, eine Rollwinkeländerung im kinematischen Bezugssystem erzeugt, besagte Rollwinkeländerung in eine Solländerung im körpereigenen Bezugssystem transformiert, und unter Berücksichtigung der transformierten Solländerung die Ausgabebefehle zur Ansteuerung der Propeller aktualisiert.

Anders ausgedrückt, ist die Rollregelung grundsätzlich eine Transformation. Die kommandierte Rollbewegung (Solländerung) ist im kinematischen System begriffen und wird ins körperfeste (körpereigene) System transformiert und dementsprechend ausgeführt. Je stärker der Multicopter beispielsweise nach vorne beschleunigt und dabei die Höhe bzw. Flugbahn hält, desto grösser wird der Nickwinkel, um welchen auch Kamera entsprechend nach oben gerichtet wird, um wieder in Flugrichtung zu zeigen. Eine Rollbewegung im kinematischen System (so auch im Kamerasystem) ist nun im körpereigenen Bezugssystem keine reine Rollbewegung mehr, sondern zusätzlich auch ein Gieren. Je grösser also der Nickwinkel ist (theoretisch bis zu 90°), desto eher liegt im körpereigenen Bezugssystem ein Gieren vor (bei 90° ausschliesslich Gieren) und desto weniger liegt ein Rollen vor (bei 90° kein Rollen mehr).

In einer weiteren Ausführungsform ist der Eingabebefehl anhand einer Bedienungseinheit, insbesondere einer Fernbedienung, erteilbar. Dies kann z.B. durch einen Joystick, eine klassische Flugzeug-Fernsteuereinheit, ein Smartphone oder eine Tablet-PC erfolgen, insbesondere mit einem Neigen und/oder Rotieren des Smartphones oder Tablet-PCs.

In einer weiteren Ausführungsform weist der Eingabebefehl zumindest einen Teil-Eingabebefehl aus der folgenden Gruppe auf: Schubänderungsbefehl, Nickänderungsbefehl, Rolländerungsbefehl, Gieränderungsbefehl bzw. Schub-Eingabebefehl, Nick-Eingabebefehl, Gier-Eingabebefehl, Roll-Eingabebefehl.

In einer weiteren Ausführungsform weist die Solländerung zumindest eine Teil-Solländerung aus der folgenden Gruppe auf: Bewegungsgeschwindigkeit, Nickwinkeländerung, Gierwinkeländerung, Rollwinkeländerung bzw. Schub-Solländerung, Nick-Solländerung, Gier-Solländerung, Roll-Solländerung.

In einer weiteren Ausführungsform korreliert der Ausgabebefehl mit zumindest einer Teil-Solländerung und bewirkt eine Leistungsänderung von mindestens einem Propeller.

In einer weiteren Ausführungsform ist das Verfahren als Flugmodus einer Bedienungseinheit eines Multicopters aktivierbar, insbesondere wobei der Flugmodus automatisch bei Erreichen einer Grenzgeschwindigkeit aktiviert wird und/oder bei Unterschreiten der Grenzgeschwindigkeit deaktiviert wird. Der Multicopter befindet sich unterhalb der Grenzgeschwindigkeit in einem Schwebeflug bzw. nimmt einen solchen Schwebeflug bei Unterschreiten dieser Grenzgeschwindigkeit automatisch gesteuert ein.

In einer weiteren Ausführungsform wird die Solländerung hinsichtlich eines kinematischen Bezugssystems des Multicopters erzeugt, bevor sie in das körpereigene Bezugssystem transformiert werden.

Die Erfindung betrifft weiterhin ein Flugsteuerungssystem für einen Multicopter, mit einer Steuerungseinheit zum Ansteuern von motorisierten Propellern des Multicopters und einer Bedienungseinheit, insbesondere einer Fernbedienung, zum Erteilen von Eingabebefehlen für die Steuerungseinheit, wobei die Steuerungseinheit dazu ausgebildet ist, die Eingabebefehle derart zu verarbeiten, sodass der Multicopter eine aufgrund des Eingabebefehls für ein Tragflächenflugzeug zu erwartende Flugbewegung ausführt, insbesondere sodass die Propeller derart ansteuerbar sind, dass der Multicopter ein für ein Tragflächenflugzeug charakteristisches Flugverhalten annimmt.

Hierbei können der Eingabebefehl erhalten und verarbeitet, in Abhängigkeit vom verarbeiteten Eingabebefehl eine Solländerung für den Bewegungszustand erzeugt, die Solländerung in ein körpereigenes Bezugssystem des Multicopters transformiert, und in Abhängigkeit von der transformierten Solländerung der Ausgabebefehl zur Ansteuerung der Propeller erzeugt werden.

Insbesondere weist die Steuerungseinheit einen implementierten Flugzeug-Flugmodus auf, bei dessen Ausführung eine der oben beschrieben Ausführungsformen des Verfahrens zur Flugsteuerung ausgeführt wird.

Die Erfindung betrifft weiterhin ein Anzeigesystem zur visuellen Unterstützung einer Flugsteuerung eines Multicopters durch einen Benutzer, mit einer an dem Multicopter vorgesehenen, insbesondere bewegbar befestigten, Kamera zur Erzeugung eines Videosignals, einer Bedienungseinheit, insbesondere einer Fernbedienung, zum Bereitstellen von Eingabebefehlen für die Steuerungseinheit des Multicopters, mit einem Display zur Anzeige des Videosignals und mit einer Sensoreinheit zur fortlaufenden Ermittlung von Messwerten in Abhängigkeit des momentanen Flugzustandes des Multicopters in seinem kinematischen Bezugssystem.

Das Anzeigesystem verfügt zudem über eine Bildbereitstellungseinheit zur Bereitstellung eines Live-Bildes entsprechend einer momentanen Flugrichtung des Multicopters, wobei die Bildbereitstellungseinheit zum Erhalt einer durch die Sensoreinheit bereitstellbaren Information bezüglich des Flugzustands des Multicopters ausgebildet ist und mittels der Bildbereitstellungseinheit ein Live-Bildausschnitt aus einem durch das Videosignal repräsentierten Gesamtbild erzeugbar ist, wobei der Live-Bildausschnitt einem Sichtbereich der Kamera um die momentane Flugrichtung entspricht, und/oder die Kamera basierend auf der Information zumindest elevativ gesteuert ausrichtbar ist, wobei die Kamera bewegbar am Multicopter befestigt ist.

Insbesondere wird für der Ausrichtung der Ka-

mera eine elevative Winkeldifferenz ($\alpha_{kv}$) berücksichtigt.

Die Erfindung betrifft weiterhin ein Computerprogrammprodukt, zur Ausführung des erfindungsgemässen Verfahrens, welches auf einem maschinenlesbaren Träger gespeichert ist, oder als Computer-Daten-Signal verkörpert ist durch eine elektromagnetische Welle.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen

Fig. 1:    Kräfte und Winkel in Abhängigkeit des Verlaufs einer Trajektorie eines Multicopters;

Fig. 2:    Flussdiagramm der Zusammenhänge einer erfindungsgemässen Methode;

Fig. 3:    Schub-Geschwindigkeits-Diagramm eines Multicopters mit einer erfindungsgemässen Steuerung;

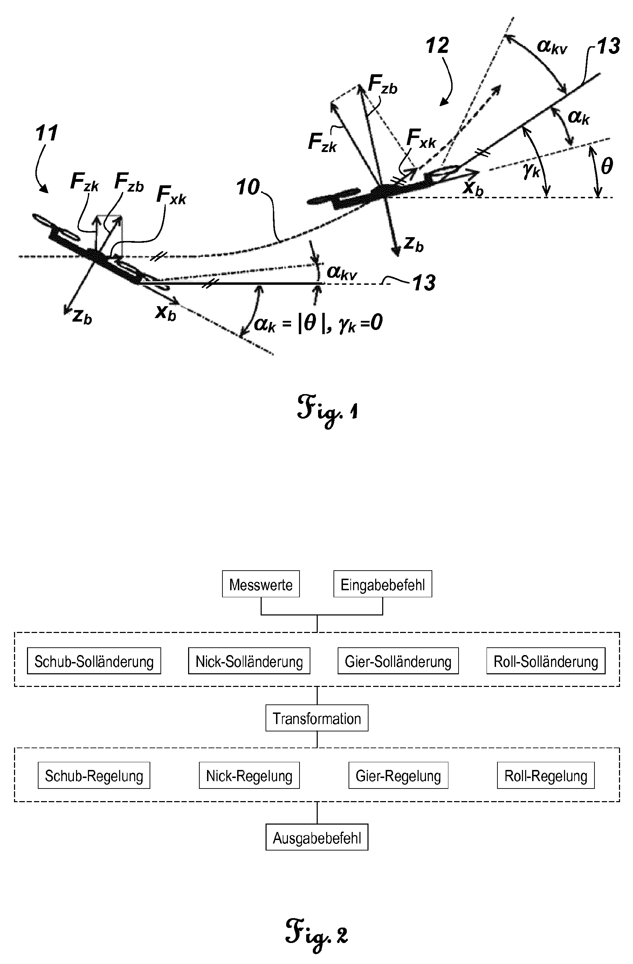

Figur 1 zeigt eine Trajektorie 10 eines Multicopters, wobei die beiden eingezeichneten Multicopter zwei verschiedene Zustände 11 und 12 auf der Fahrt entlang dieser Trajektorie verdeutlichen. $F_{zb}$ ist der Kraftvektor in z-Richtung des körpereigenen (b für "body") Bezugssystems des Multicopters. $F_{zk}$ und $F_{xk}$ sind die Kraftvektoren, die sich bei der Transformation von $F_{zb}$ in das kinematische (k für kinematic) Bezugssystem ergeben. Ein die aktuelle Flugbewegung repräsentierender Bewegungsvektor (nicht gezeigt) verläuft entlang der Bewegungsachse (13). $\alpha_k$ ist der Verkippungswinkel zwischen dem körpereigenen (Index b) und dem kinematischen (Index k) Koordinatensystem. $\theta$ ist der Nickwinkel des Multicopters bezogen auf das NED-System (NED für North-East-Down), den er infolge einer Vorwärtsbewegung einlegen muss. Da der Multicopter in Zustand 11 eine Horizontalfahrt macht, ist hier betraglich $\alpha_k$ gleich $\theta$. $\gamma_k$ gibt den Steigwinkel an und ist daher in Zustand 11 gleich null.

In Zustand 12 hat der Multicopter auf seiner Trajektorie einen Steigflug eingenommen. Logischerweise ist $F_{xk}$ immer gleichgerichtet mit der Trajektorie am momentanen Multicopter-Standort. Der Nickwinkel $\theta$ ist nunmehr ungleich dem Verkippungswinkel $\alpha_k$, beide zusammen addieren sich betraglich zum Steigwinkel $\gamma_k$. Der Kraftvektor $F_{zb}$ ist nun aufgrund der Bahnkrümmung bzw. der Zentripetalbeschleunigung in diesem Punkt bedeutend grösser als in Zustand 11. Die Propeller müssen nicht mehr nur gegen die Schwerkraft des Multicopters arbeiten und die Vorwärtsbewegung bewerkstelligen, sondern zusätzlich auch gegen diese Zentripetalbeschleunigung.

$\alpha_{kv}$ gibt einen virtuellen $\alpha_k$-Wert an, welcher den Anstellwinkel eines Flugzeugs imitieren soll. Dieser Winkel ist nicht für die Kinematik, sondern nur für die Anzeige des Kamerabildes bzw. der Lagesteuerung der Kamera relevant.

$F_{xk}$ ist als "Schub" ein Eingabebefehl des Benutzers. Die Ausrichtung von $F_{xk}$ in Bezug zum körpereigenen Koordinatensystem ist durch $\alpha_k$ bestimmt:

$$\alpha_k = \arctan\left(\frac{m*g}{F_{xk}}\right)$$

Der Gesamtschub $F_{zb}$ bezogen auf den Multicopter ergibt sich zu:

$$F_{zb} = \sqrt{F_{zk}^2 + F_{xk}^2}$$

Im Block "Nick-Regelung" (Alpha-Regelung) in Figur 2 wird in Abhängigkeit von der Schubeingabe und der Nickeingabe eines Benutzers ein $\alpha_k$-Wert berechnet (Nickwinkel) und anhand eines PID-Reglers geregelt. Insbesondere werden bei der Nick-Regelung oder Alpha-Regelung eine Vorwärtsschubvorgabe und eine Alpha/Nick-Vorgabe kombiniert. Bei einer reinen Vorwärtsschubvorgabe ändert sich die Nicklage aber der Steigwinkel/Flugbahn bleibt gleich. Bei einer Nickvorgabe ändert sich die Nicklage und die Flugbahn wird gekrümmt. Der Schub $F_{xk}$ kann auch heruntergeregelt werden, wenn eine scharfe Kurve geflogen werden soll und dabei die Gravitationskräfte stark ansteigen. Ist die Schubeingabe gleich null, so wird der Multicopter in einen Schwebemodus geführt, wobei der Multicopter schnellstmöglich zum Stillstand abgebremst wird und anschliessend seine Position automatisch konstant gehalten wird. Bezogen auf das kinematische System kann der Schub auch negative Werte annehmen, z.B. beim Fliegen von sehr engen Kurven.

Im Block "Schub-Regelung" wird der Gesamtschub $F_{zb}$ bestimmt und insbesondere eine zusätzliche Nicklage ausgegeben, sobald der Multicopter an die Maximalschub-Grenzen gelangt. In Abhängigkeit von bestimmten Parametern wie z.B. der Batteriespannung, der Geschwindigkeit, der Luftdichte und/oder der momentanen Lage des Multicopters wird in einer Lookup-Tabelle ein Schwebeschub als Basis bestimmt, auf welche noch ein Zusatzschub aufaddiert wird. Darüber hinaus wird der Steigwinkel $\gamma_k$ anhand eines PID-Reglers geregelt oder für ein stabiles Verhalten auf Null geregelt, sollte keine Eingabe erfolgen (Eingabe meint hier eine Steigungsänderung).

Sollte also kein Änderungswunsch bestehen und sich der Multicopter in einem bestimmten Rollwinkelbereich befinden, wird automatisch die momentane Steigung beibehalten (insbesondere im Rahmen der Nick-Regelung), was durch den (im Wesentlichen konstanten) Gesamtschub und durch die Nicklage realisiert wird.

Es sei bemerkt, dass die Schub-Regelung hier nur im Steigwinkel-Bereich von zwischen -90° und 90° anwendbar ist, weil die Propeller in der Regel keinen negativen Schub erzeugen können.

Die Schub-Regelung folgt den Eingabebefehlen gemäss folgender Gleichung:

$$F_{zk} = F_{zh} + \frac{1}{2} * \rho * v_{xk}^2 * s * c_{l\alpha} * b_{\alpha_{kv}}$$

Hierbei ist $F_{zh}$ der besagte Schwebeschub (=m*g), $\rho$ die Luftdichte und $v_{xk}$ die momentane Geschwindigkeit. Die Konstanten s und $c_{l\alpha}$ bestimmen die "Flugzeugcharakteristik" der Longitudinalbewegung und $b_{\alpha kv}$ ist eine Variable, welche vom eingestellten "virtuellen $\alpha_k$-Wert" $\alpha_{kv}$ abhängt. Dieser virtuelle $\alpha_k$-Wert kann vom Piloten vorgegeben werden.

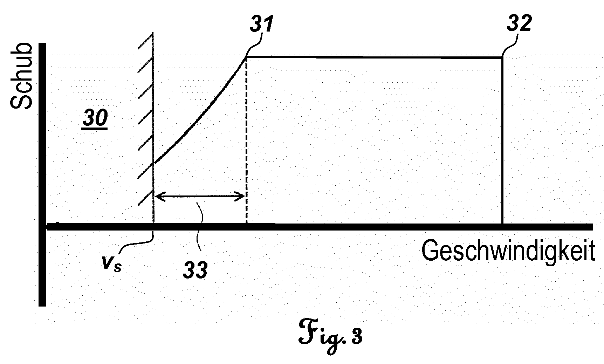

Diese Verhältnisse resultieren in dem in Figur 3 gezeigten Diagramm. Der Bereich 30 ist durch den Schwebemodus gekennzeichnet, in welchem der Multicopter nach Art des Standes der Technik ganz herkömmlich bedient wird, also elevativ, seitlich und vorwärts/rückwärts im Einzelnen.

Ist einmal eine Startgeschwindigkeit $v_s$ erreicht, wechselt der Multicopter automatisch in den erfindungsgemässen Modus, in welchem sich der Multicopter so steuern lässt, wie ein Tragflächenflugzeug. Da die Maximallast der Propeller begrenzt ist, findet der Schub in der Geraden zwischen den Punkten 31 und 32 seine Maximalbegrenzung. Um noch Reserven für Manöver zu wahren, kann diese Begrenzung in Relation etwa zu 85% bis 95% der Motorenleistung gesetzt werden. Der Verlauf des Schubes ist zwischen $v_s$ und 31, wie formelmässig bereits gezeigt wurde, abhängig vom Quadrat der Geschwindigkeit $v_{xk}$. Darüber hinaus kann, wenn zwischen Punkt 31 und Punkt 32 der maximale Gesamtschub erreicht ist, eine zusätzliche Nicklage kommandiert werden, um gewisse Kurven noch enger fliegen zu können.

Anhand der in Figur 2 gezeigten Gier-Regelung wird die Geschwindigkeit in y-Richtung (Driftgeschwindigkeit) des kinematischen/aerodynamischen Bezugssystems ebenfalls PIDgeregelt mit Ausgabe einer Gierrate im kinematischen System. Anhand dessen wird die Nase des Multicopters stets in die Flugrichtung gedreht, was im übertragenen Sinne der Neutralisierung der Seitenkräfte im Kurvenflug beim Flugzeug anhand des Seitenruders gleicht.

Weil das Driften dadurch stets verhindert wird, würde der Multicopter bei negativen Seitenkräften (z.B. Einfluss von Seitenwind) ausscheren und nicht mehr in die gewünschte Flugrichtung fliegen. Bei kinematischen Messdaten wird bei Windeinfluss ein Schiebeflug detektiert und die Nase wird von der Windrichtung weggedreht bis der Wind von hinten auf den Multicopter bläst und kein Schieben mehr detektiert wird. Der Pilot kann einem Windeinfluss mit einem Hängewinkel entgegensteuern.

Die Gier-Regelung ist dazu da, die Kamera des Multicopters stets in Flugrichtung zu richten, damit dieser - ebenso wie im Flugzeug - immer in Flugrichtung schaut. Für die elevative Ausrichtung der Kamera ist in einer weiteren Ausführung der Erfindung ebenfalls eine Imitationsfunktion vorgesehen. So kann die Kamera schwenkbar am Multicopter befestigt sein, sodass das Einnicken des Multicopters so ausgeglichen wird, dass die Kamera immer geradeaus schaut, also in Richtung $v_k$. Dabei kann ebenfalls das oben erwähnte $\alpha_{kv}$ mit berücksichtigt werden. Alternativ oder zusätzlich (z.B. als Bild-Stabilisator) kann der elevative Ausgleich des Kamerabildes digital, statt mechanisch, erfolgen. Dazu kann eine Panorama- bzw. Ultraweitwinkel-Kamera vorgesehen sein und jeweils digital nur derjenige Bildausschnitt für den Benutzer angezeigt werden, welcher momentan in Flugrichtung schaut. Beide Lösungen bedürfen unter anderem Winkelsensoren und/oder Beschleunigungssensoren, wie sie aus dem Stand der Technik bekannt sind. Als weitere Ausführungsform kann zusätzlich eine Umsichtsfunktion durch die genannte Ultraweitwinkel-Kamera bereitgestellt werden, anhand derer sich der Benutzer elevativ aber auch seitlich "umsehen" kann. Dies wird auf einem Display oder etwa einer Virtual Reality Brille realisiert, wobei letztere beispielsweise Kopfneigungen messen kann und in Abhängigkeit dieser ein entsprechendes Bild anzeigt.

Alle zuvor genannten Outputs (Nickwinkel, Gesamtschub, Gierwinkel, Rollwinkel) beziehen sich auf das kinematische Bezugssystem. Daher muss zur Ansteuerung der Propeller noch eine Transformation in das körpereigene Bezugssystem stattfinden. Auch hierfür sind wieder die Werte aus Sensoren nötig, welche kontinuierlich die Lage und Geschwindigkeit des Multicopters im NED-Bezugssystem überwachen.

Die Bedienung der erfindungsgemässen Steuerung ist beispielhaft möglich über handelsübliche Fernbedienungen, Smartphones, Joysticks, Steuerknüppel oder Gamepads. Optional ist ein Display, welches dem Benutzer das über das optionale Kamerasystem aufgenommene First-Person-View Livebild zur Verfügung stellt.

Im Speziellen ist jede der vorangehend gezeigten und erklärten Regelungen (Gier-Regelung, Nick-Regelung, Schub-Regelung, Roll-Regelung) auch einzeln implementierbar bzw. einsetzbar, um anhand der Steuerung ein für ein Flugzeug charakteristisches Flugverhalten zu erzeugen.

Es versteht sich, dass die vorangehend gezeigten und erklärten Figuren nur mögliche Ausführungsbeispiele schematisch darstellen. Insbesondere wird darauf hingewiesen, dass die explizit dargestellten und erklärten Beispiele ausnahmslos sowohl separat voneinander als auch in jeglicher Kombination miteinander einsetzbar sowie auch mit entsprechenden Vorrichtungen und Verfahren des Stands der Technik kombinierbar sind.

**Patentansprüche**

1. Computerimplementiertes Verfahren zur Flugsteuerung eines Multicopters, welcher

   • mindestens vier Propeller aufweist, die mittels eines Ausgabebefehls ansteuerbar sind,
   • zumindest eine Sensoreinheit zur fortlaufenden Ermittlung von Messwerten bezüglich eines momentanen Flugzustandes des Multicopters aufweist, und
   • ein körpereigenes Bezugssystem definiert,

   wobei der Multicopter durch ein Betreiben der Propeller basierend auf dem Ausgabebefehl in den Flugzustand versetzt ist,
   **dadurch gekennzeichnet, dass**
   ein den Flugzustand beeinflussender Eingabebefehl derart verarbeitet wird, dass der Multicopter eine aufgrund des Eingabebefehls für ein Tragflächenflugzeug zu erwartende Flugbewegung ausführt, wobei

   • der Eingabebefehl erhalten wird,
   • in Abhängigkeit von dem Eingabebefehl eine Solländerung bezüglich eines kinematischen Bezugssystems des Multicopters für den Flugzustand abgeleitet wird,
   • ein Verhältnis der Solländerung zum körpereigenen Bezugssystem berechnet wird und die Solländerung in das körpereigene Bezugssystem transformiert wird, und
   • in Abhängigkeit von der transformierten Solländerung der Ausgabebefehl zur Ansteuerung der Propeller aktualisiert wird.

2. Verfahren nach Anspruch 1,
   **dadurch gekennzeichnet, dass**
   der Ausgabebefehl durch Ansteuergrössen zur Ansteuerung der Propeller verkörpert ist und die Ansteuergrössen in Abhängigkeit von den Messwerten und dem Eingabebefehl geregelt werden.

3. Verfahren nach einem der vorherigen Ansprüche,
   **dadurch gekennzeichnet, dass**
   bei Erhalt eines Gieränderungsbefehls als Eingabebefehl eine Gierregelung mittels derartiger, insbesondere fortlaufender, Aktualisierung des Ausgabebefehls erfolgt, dass ein gegebener oder geregelter Nickwinkel des Multicopters durch die Gierregelung unverändert bleibt und eine Gierwinkeländerung entsprechend des Gieränderungsbefehls erfolgt, insbesondere wobei eine Flugbahnkrümmung erzeugt wird.

4. Verfahren nach einem der vorherigen Ansprüche,
   **dadurch gekennzeichnet, dass**
   bei Detektion einer auf den Multicopter einwirkenden Seitengeschwindigkeit eine automatische Gierregelung fortlaufend derart erfolgt, dass eine körpereigene Vorwärtsorientierung des Multicopters an eine aus der detektierten Seitengeschwindigkeit resultierende Flugrichtung angenähert wird, insbesondere wobei die resultierende Flugrichtung im Wesentlichen gleichgerichtet ist zu einer Richtung der detektierten Seitengeschwindigkeit.

5. Verfahren nach einem der vorherigen Ansprüche,
   **dadurch gekennzeichnet, dass**
   bei Erhalt eines Schubänderungsbefehls als Eingabebefehl eine Schubregelung mittels derartiger, insbesondere fortlaufender, Aktualisierung des Ausgabebefehls erfolgt, dass eine definierte Änderung der Rotationsgeschwindigkeit von zumindest zwei Propellern und eine Nickwinkeländerung des Multicopters bewirkt wird und dadurch eine Bewegungsgeschwindigkeit des Multicopters entsprechend dem Eingabebefehl angepasst wird, wobei ein die aktuelle Flugbewegung repräsentierender Bewegungsvektor zumindest im Rahmen der Schubregelung richtungsstabil gehalten wird, insbesondere wobei der Multicopter auf einer durch die aktuelle Flugbewegung definierten Bewegungsachse (13) gehalten wird,
   insbesondere wobei eine Flugbahn des Multicopters im Sinkflug oder Steigflug durch die Schubregelung ungekrümmt bleibt.

6. Verfahren nach Anspruch 5,
   **dadurch gekennzeichnet, dass**

   • in Abhängigkeit von dem Schubänderungsbefehl eine Soll-Bewegungsgeschwindigkeit des Multicopters als Führungsgrösse abgeleitet wird und
   • in Abhängigkeit von der Führungsgrösse und von den durch die zumindest eine Sensoreinheit bereitgestellten Messwerten die Ansteuergrössen für die Propeller so geregelt aktualisiert werden, dass der Multicopter in einen Flugzustand mit der Soll-Bewegungsgeschwindigkeit, insbesondere wobei der die aktuelle Flugbewegung repräsentierende Bewegungsvektor beibehalten wird, versetzt wird.

7. Verfahren nach einem der vorherigen Ansprüche,
   **dadurch gekennzeichnet, dass**
   bei Erhalt eines Nickänderungsbefehls als Eingabebefehl eine Nickregelung dadurch erfolgt, dass durch die Aktualisierung von zumindest einer Ansteuergrösse eine Nickwinkeländerung für den Multicopter derart bewirkt wird, dass der Multicopter in einen Flugzustand mit einem aus dem Nickänderungsbefehl abgeleiteten Soll-Nickwinkel versetzt wird, insbesondere wobei der Soll-Nickwinkel als Führungsgrösse verarbeitet wird.

**8.** Verfahren nach einem der vorherigen Ansprüche, **dadurch gekennzeichnet, dass** im Rahmen einer Rollregelung, bei Erhalt eines Rolländerungsbefehls als Eingabebefehl,

• eine Rollwinkeländerung im kinematischen Bezugssystem erzeugt wird,
• besagte Rollwinkeländerung in eine Solländerung im körpereigenen Bezugssystem transformiert wird, und
• unter Berücksichtigung der transformierten Solländerung der Ausgabebefehl zur Ansteuerung der Propeller aktualisiert wird.

**9.** Verfahren nach einem der vorherigen Ansprüche, **dadurch gekennzeichnet, dass** der Eingabebefehl durch zumindest einen Teil-Eingabebefehl aus der folgenden Gruppe verkörpert ist:

• Schubänderungsbefehl,
• Nickänderungsbefehl,
• Rolländerungsbefehl,
• Gieränderungsbefehl,

und die Solländerung zumindest eine Teil-Solländerung aus der folgenden Gruppe repräsentiert:

• Bewegungsgeschwindigkeit,
• Nickwinkeländerung,
• Gierwinkeländerung,
• Rollwinkeländerung,

insbesondere wobei der aktualisierte Ausgabebefehl mit zumindest einer Teil-Solländerung korreliert und eine Leistungsänderung von mindestens einem Propeller bewirkt.

**10.** Verfahren nach einem der vorherigen Ansprüche, **dadurch gekennzeichnet, dass** das Verfahren als Flugzeug-Flugmodus einer Steuerungseinheit eines Multicopters ausgeführt wird, insbesondere wobei der Flugzeug-Flugmodus automatisch bei Überschreiten einer Grenzgeschwindigkeit ($v_s$) des Multicopters aktiviert wird bzw. bei Unterschreiten der Grenzgeschwindigkeit deaktiviert wird.

**11.** Flugsteuerungssystem für einen Multicopter, mit

• einer Steuerungseinheit zum Ansteuern von motorisierten Propellern des Multicopters und
• einer Bedienungseinheit, insbesondere einer Fernbedienung, zum Erteilen eines Eingabebefehls für die Steuerungseinheit,

**dadurch gekennzeichnet, dass** die Steuerungseinheit dazu ausgebildet ist, den Eingabebefehl derart zu verarbeiten, dass die Propeller derart ansteuerbar sind, dass der Multicopter eine aufgrund des Eingabebefehls für ein Tragflächenflugzeug zu erwartende Flugbewegung ausführt.

**12.** Flugsteuerungssystem nach Anspruch 11, **dadurch gekennzeichnet, dass** die Steuerungseinheit einen implementierten Flugzeug-Flugmodus aufweist, bei dessen Ausführung ein Verfahren zur Flugsteuerung nach einem der Ansprüche 1 bis 10 ausgeführt wird.

**13.** Anzeigesystem zur visuellen Unterstützung einer Flugsteuerung eines Multicopters durch einen Benutzer, mit

• einer an dem Multicopter vorgesehenen Kamera zur Erzeugung eines Videosignals,
• einer Bedienungseinheit, insbesondere einer Fernbedienung, zum Bereitstellen eines Eingabebefehls für eine Steuerungseinheit des Multicopters,
• einem Display zur Anzeige des Videosignals,
• zumindest einer Sensoreinheit zur fortlaufenden Ermittlung von Messwerten in Abhängigkeit des momentanen Flugzustandes des Multicopters,

**gekennzeichnet durch** eine Bildbereitstellungseinheit zur Bereitstellung eines Live-Bildes entsprechend einem die aktuelle Flugbewegung repräsentierenden Bewegungsvektor des Multicopters, wobei die Bildbereitstellungseinheit zum Erhalt einer Information bezüglich des Flugzustands des Multicopters ausgebildet ist und mittels der Bildbereitstellungseinheit

• ein Live-Bildausschnitt aus einem **durch** das Videosignal repräsentierten Gesamtbild erzeugbar ist, wobei der Live-Bildausschnitt einem Sichtbereich der Kamera um die momentane Flugrichtung entspricht, und/oder
• die Kamera basierend auf der Information zumindest elevativ gesteuert ausrichtbar ist, wobei die Kamera bewegbar am Multicopter befestigt ist.

**14.** Anzeigesystem nach Anspruch 13, **dadurch gekennzeichnet, dass** für die Ausrichtung der Kamera eine elevative Winkeldifferenz ($\alpha_{kv}$) berücksichtigt wird.

**15.** Computerprogrammprodukt, das auf einem maschinenlesbaren Träger gespeichert ist, oder Computer-Daten-Signal, verkörpert durch eine elektromagnetische Welle, zur Ausführung eines computerimplementierten Verfahrens nach einem der Ansprüche 1 bis 10, insbesondere wobei das computerimplementierte Verfahrens das Computerprogrammprodukt oder das Computer-Daten-Signal verkörpert.

**Geänderte Patentansprüche gemäss Regel 137(2) EPÜ.**

1.  Computerimplementiertes Verfahren zur Flugsteuerung eines Multicopters, welcher

    • mindestens vier Propeller aufweist, die mittels eines Ausgabebefehls ansteuerbar sind,
    • zumindest eine Sensoreinheit zur fortlaufenden Ermittlung von Messwerten bezüglich eines momentanen Flugzustandes des Multicopters aufweist, und
    • ein körpereigenes Bezugssystem definiert,

    wobei der Multicopter durch ein Betreiben der Propeller basierend auf dem Ausgabebefehl in den Flugzustand versetzbar ist,
    **dadurch gekennzeichnet, dass**
    ein den Flugzustand beeinflussender Eingabebefehl derart verarbeitet wird, dass der Multicopter eine aufgrund des Eingabebefehls für ein Tragflächenflugzeug zu erwartende Flugbewegung ausführt, indem

    • der Eingabebefehl erhalten wird,
    • in Abhängigkeit von dem Eingabebefehl eine Solländerung bezüglich eines kinematischen Bezugssystems des Multicopters für den Flugzustand abgeleitet wird,
    • ein Verhältnis der Solländerung zum körpereigenen Bezugssystem berechnet wird und die Solländerung in das körpereigene Bezugssystem transformiert wird, und
    • in Abhängigkeit von der transformierten Solländerung der Ausgabebefehl zur Ansteuerung der Propeller aktualisiert wird.

2.  Computerimplementiertes Verfahren nach Anspruch 1, **dadurch gekennzeichnet, dass** der Ausgabebefehl durch Ansteuergrössen zur Ansteuerung der Propeller verkörpert ist und die Ansteuergrössen in Abhängigkeit von den Messwerten und dem Eingabebefehl geregelt werden.

3.  Computerimplementiertes Verfahren nach einem der vorherigen Ansprüche,
    **dadurch gekennzeichnet, dass**
    bei Erhalt eines Gieränderungsbefehls als Eingabebefehl eine Gierregelung mittels derartiger, insbesondere fortlaufender, Aktualisierung des Ausgabebefehls erfolgt, dass ein gegebener oder geregelter Nickwinkel des Multicopters durch die Gierregelung unverändert bleibt und eine Gierwinkeländerung entsprechend des Gieränderungsbefehls erfolgt, insbesondere wobei eine Flugbahnkrümmung erzeugt wird.

4.  Computerimplementiertes Verfahren nach einem der vorherigen Ansprüche,
    **dadurch gekennzeichnet, dass**
    bei Detektion einer auf den Multicopter einwirkenden Seitengeschwindigkeit eine automatische Gierregelung fortlaufend derart erfolgt, dass eine körpereigene Vorwärtsorientierung des Multicopters an eine aus der detektierten Seitengeschwindigkeit resultierende Flugrichtung angenähert wird, insbesondere wobei die resultierende Flugrichtung im Wesentlichen gleichgerichtet ist zu einer Richtung der detektierten Seitengeschwindigkeit.

5.  Computerimplementiertes Verfahren nach einem der vorherigen Ansprüche,
    **dadurch gekennzeichnet, dass**
    bei Erhalt eines Schubänderungsbefehls als Eingabebefehl eine Schubregelung mittels derartiger, insbesondere fortlaufender, Aktualisierung des Ausgabebefehls erfolgt, dass eine definierte Änderung der Rotationsgeschwindigkeit von zumindest zwei Propellern und eine Nickwinkeländerung des Multicopters bewirkt wird und dadurch eine Bewegungsgeschwindigkeit des Multicopters entsprechend dem Eingabebefehl angepasst wird, wobei ein die aktuelle Flugbewegung repräsentierender Bewegungsvektor zumindest im Rahmen der Schubregelung richtungsstabil gehalten wird, insbesondere wobei der Multicopter auf einer durch die aktuelle Flugbewegung definierten Bewegungsachse (13) gehalten wird,
    insbesondere wobei eine Flugbahn des Multicopters im Sinkflug oder Steigflug durch die Schubregelung ungekrümmt bleibt.

6.  Computerimplementiertes Verfahren nach Anspruch 5, **dadurch gekennzeichnet, dass**

    • in Abhängigkeit von dem Schubänderungsbefehl eine Soll-Bewegungsgeschwindigkeit des Multicopters als Führungsgrösse abgeleitet wird und
    • in Abhängigkeit von der Führungsgrösse und von den durch die zumindest eine Sensoreinheit bereitgestellten Messwerten die Ansteuergrössen für die Propeller so geregelt aktualisiert werden, dass der Multicopter in einen Flugzustand mit der Soll-Bewegungsgeschwindigkeit, insbesondere wobei der die aktuelle Flugbewegung repräsentierende Bewegungsvektor beibehalten wird, versetzt wird.

7.  Computerimplementiertes Verfahren nach einem der vorherigen Ansprüche,
    **dadurch gekennzeichnet, dass**
    bei Erhalt eines Nickänderungsbefehls als Eingabebefehl eine Nickregelung dadurch erfolgt, dass durch die Aktualisierung von zumindest einer Ansteuergrösse eine Nickwinkeländerung für den Multicopter derart bewirkt wird, dass der Multicopter in einen Flugzustand mit einem aus dem Nickänderungsbefehl abgeleiteten Soll-Nickwinkel versetzt wird, insbesondere wobei der Soll-Nickwinkel als Führungsgrösse verarbeitet wird.

8. Computerimplementiertes Verfahren nach einem der vorherigen Ansprüche,
**dadurch gekennzeichnet, dass**
im Rahmen einer Rollregelung, bei Erhalt eines Rolländerungsbefehls als Eingabebefehl,

   • eine Rollwinkeländerung im kinematischen Bezugssystem erzeugt wird,
   • besagte Rollwinkeländerung in eine Solländerung im körpereigenen Bezugssystem transformiert wird, und
   • unter Berücksichtigung der transformierten Solländerung der Ausgabebefehl zur Ansteuerung der Propeller aktualisiert wird.

9. Computerimplementiertes Verfahren nach einem der vorherigen Ansprüche,
**dadurch gekennzeichnet, dass**
der Eingabebefehl durch zumindest einen Teil-Eingabebefehl aus der folgenden Gruppe verkörpert ist:

   • Schubänderungsbefehl,
   • Nickänderungsbefehl,
   • Rolländerungsbefehl,
   • Gieränderungsbefehl,

und die Solländerung zumindest eine Teil-Solländerung aus der folgenden Gruppe repräsentiert:

   • Bewegungsgeschwindigkeit,
   • Nickwinkeländerung,
   • Gierwinkeländerung,
   • Rollwinkeländerung,

insbesondere wobei der aktualisierte Ausgabebefehl mit zumindest einer Teil-Solländerung korreliert und eine Leistungsänderung von mindestens einem Propeller bewirkt.

10. Computerimplementiertes Verfahren nach einem der vorherigen Ansprüche,
**dadurch gekennzeichnet, dass**
das Verfahren als Flugzeug-Flugmodus einer Steuerungseinheit eines Multicopters ausgeführt wird, insbesondere wobei der Flugzeug-Flugmodus automatisch bei Überschreiten einer Grenzgeschwindigkeit ($v_s$) des Multicopters aktiviert wird bzw. bei Unterschreiten der Grenzgeschwindigkeit deaktiviert wird.

11. Flugsteuerungssystem für einen Multicopter, mit

   • einer Steuerungseinheit zum Ansteuern von motorisierten Propellern des Multicopters und
   • einer Bedienungseinheit, insbesondere einer Fernbedienung, zum Erteilen eines Eingabebefehls für die Steuerungseinheit,

**dadurch gekennzeichnet, dass**
die Steuerungseinheit dazu ausgebildet ist, den Eingabebefehl derart zu verarbeiten, dass die Propeller derart ansteuerbar sind, dass der Multicopter eine aufgrund des Eingabebefehls für ein Tragflächenflugzeug zu erwartende Flugbewegung ausführt, wobei das Flugsteuerungssystem ein computerimplementiertes Verfahren gemäss einem der vorangehenden Ansprüche ausführt.

12. Flugsteuerungssystem nach Anspruch 11,
**dadurch gekennzeichnet, dass**
die Steuerungseinheit einen implementierten Flugzeug-Flugmodus aufweist, bei dessen Ausführung ein Verfahren zur Flugsteuerung nach einem der Ansprüche 1 bis 10 ausgeführt wird.

13. Anzeigesystem zur visuellen Unterstützung einer Flugsteuerung eines Multicopters durch einen Benutzer, mit

   • einer an dem Multicopter vorgesehenen Kamera zur Erzeugung eines Videosignals,
   • einer Bedienungseinheit, insbesondere einer Fernbedienung, zum Bereitstellen eines Eingabebefehls für eine Steuerungseinheit des Multicopters,
   • einem Display zur Anzeige des Videosignals,
   • zumindest einer an dem Multicopter vorgesehenen Sensoreinheit zur fortlaufenden Ermittlung von Messwerten in Abhängigkeit des momentanen Flugzustandes des Multicopters,

**gekennzeichnet durch**
eine Bildbereitstellungseinheit zur Bereitstellung eines Live-Bildes entsprechend einem die aktuelle Flugbewegung repräsentierenden Bewegungsvektor des Multicopters, wobei die Bildbereitstellungseinheit zum Erhalt einer Information bezüglich des Flugzustands des Multicopters ausgebildet ist und mittels der Bildbereitstellungseinheit

   • ein Live-Bildausschnitt aus einem **durch** das Videosignal repräsentierten Gesamtbild erzeugbar ist, wobei der Live-Bildausschnitt einem Sichtbereich der Kamera um die momentane Flugrichtung entspricht, und/oder
   • die Kamera basierend auf der Information zumindest elevativ gesteuert ausrichtbar ist, wobei die Kamera bewegbar am Multicopter befestigt ist.

**14.** Anzeigesystem nach Anspruch 13,
**dadurch gekennzeichnet, dass**
für die Ausrichtung der Kamera eine elevative Winkeldifferenz ($\alpha_{kv}$) berücksichtigt wird.

**15.** Computerprogrammprodukt, das auf einem maschinenlesbaren Träger gespeichert istverkörpert durch eine elektromagnetische Welle, zur Ausführung eines computerimplementierten Verfahrens nach einem der Ansprüche 1 bis 10, insbesondere wobei das computerimplementierte Verfahrens das Computerprogrammprodukt verkörpert.

$$\alpha_k = |\theta|, \gamma_k = 0$$

Fig. 1

| Messwerte | Eingabebefehl |
|---|---|

| Schub-Solländerung | Nick-Solländerung | Gier-Solländerung | Roll-Solländerung |
|---|---|---|---|

Transformation

| Schub-Regelung | Nick-Regelung | Gier-Regelung | Roll-Regelung |
|---|---|---|---|

Ausgabebefehl

Fig. 2

Fig. 3

**Europäisches Patentamt**
**European Patent Office**
**Office européen des brevets**

# EUROPÄISCHER RECHERCHENBERICHT

**Nummer der Anmeldung**

EP 15 19 5431

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 594 862 B2 (CALLOU FRANCOIS [FR] ET AL) 26. November 2013 (2013-11-26) | 1,2,7-11 | INV. B64C39/02 G05D1/00 |
| Y | * das ganze Dokument * | 3-6,12, 15 | |
| Y | US 2013/176423 A1 (RISCHMULLER MICHAEL [FR] ET AL) 11. Juli 2013 (2013-07-11) * das ganze Dokument * | 3-6,12, 15 | |
| X | US 2015/268666 A1 (WANG TAO [CN] ET AL) 24. September 2015 (2015-09-24) * das ganze Dokument * | 13,14 | |

**RECHERCHIERTE SACHGEBIETE (IPC)**

A63H
G05D
B64C

Der vorliegende Recherchenbericht wurde für alle Patentansprüche erstellt

| Recherchenort | Abschlußdatum der Recherche | Prüfer |
|---|---|---|
| München | 17. Mai 2016 | Roch, Vincent |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 5431

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2016

| Im Recherchenbericht angeführtes Patentdokument | Datum der Veröffentlichung | Mitglied(er) der Patentfamilie | Datum der Veröffentlichung |
|---|---|---|---|
| US 8594862 B2 | 26-11-2013 | CN 103285599 A<br>EP 2613213 A1<br>FR 2985329 A1<br>JP 2013144539 A<br>US 2013173088 A1 | 11-09-2013<br>10-07-2013<br>05-07-2013<br>25-07-2013<br>04-07-2013 |
| US 2013176423 A1 | 11-07-2013 | CN 103394199 A<br>EP 2613214 A1<br>FR 2985581 A1<br>JP 2013139256 A<br>US 2013176423 A1 | 20-11-2013<br>10-07-2013<br>12-07-2013<br>18-07-2013<br>11-07-2013 |
| US 2015268666 A1 | 24-09-2015 | US 8903568 B1<br>US 2015142213 A1<br>US 2015268666 A1 | 02-12-2014<br>21-05-2015<br>24-09-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8474761 B

- US 8473125 B